# EUROPÄISCHE PATENTSCHRIFT

(11) **EP 1 505 323 B1**
(45) Veröffentlichungstag und Bekanntmachung des Hinweises auf die Patenterteilung: **03.01.2007**
(21) Anmeldenummer: 04013764.8
(22) Anmeldetag: 11.06.2004
(51) Int. Cl.: F16K 11/052, F16K 11/085, F01P 7/16

(54) **Ventil mit Vollabsperrung**
Valve with full shut-off position
Valve avec pleine position d'interruption

(30) Priorität: 06.08.2003 DE 10335831
(43) Veröffentlichungstag der Anmeldung: 09.02.2005
(73) Patentinhaber: ROBERT BOSCH GMBH, 70442 Stuttgart (DE)
(72) Erfinder: Muschelknautz, Claudius, 77815 Buehl (DE); Schmidt, Roland, 77815 Buehl (DE); Pfetzer, Johannes, 77815 Buehl (DE); Reeb, Georg, 77815 Buehl Eisental (DE); Eigenmann, Joerg, Toluca (MX); Vollmer, Dirk, 77815 Buehl (DE); Taghouti, Nizar, 76137 Karlsruhe (DE); Kern, Ottmar, 76135 Karlsruhe (DE); Krause, Bernhard, 77887 Sasbachwalden (DE)

(56) Entgegenhaltungen:
- EP-A- 1 359 296
- DE-A- 3 516 502
- DE-A- 10 053 850
- DE-A- 10 155 386

## Beschreibung

### Stand der Technik

Die Erfindung geht aus von einem Ventil zur Steuerung von Volumenströmen, insbesondere Volumenströmen in einem Kühl- und/oder Heizkreislauf, beispielsweise eines Kraftfahrzeuges, bzw. von einem solchen Kühl- und/oder Heizkreislauf nach den Oberbegriffen der unabhängigen Ansprüche 1 bzw. 12.

Ein Kühl- bzw. Heizkreislauf, beispielsweise eines Kraftfahrzeuges, beinhaltet in der Regel eine zu kühlende Wärmequelle, beispielsweise den Fahrzeugmotor, die mittels eines Kühlmediums durch freie oder erzwungene Konvektion gekühlt werden soll. Die Temperaturdifferenz über der Wärmequelle ist vom Wärmeeintrag und von der Größe des Volumenstroms des Kühlmittels abhängig, während die absolute Temperatur des Kühlmediums durch den Wärmeeintrag der Wärmequelle, die Wärmeabfuhr über etwaige, im Kühlkreislauf befindliche Kühlerelemente und die Wärmekapazitäten der beteiligten Materialien bestimmt wird.

Um beispielsweise den Verbrennungsmotor eines Kraftfahrzeugs vor dem Überhitzen zu schützen und die Abwärme des Motors gegebenenfalls zur Heizung des Fahrgastraumes nutzen zu können, wird im Kühl- und Heizkreislauf des Fahrzeuges ein Kühlmittel umgewälzt, das die überschüssige Wärme des Motors aufnehmen und im gewünschten Maße abführen kann. Ein solcher Kühl- bzw. Heizkreislauf eines Kraftfahrzeugs umfasst im Allgemeinen verschiedene, miteinander verbundene Teilzweige, wie beispielsweise einen Kühlerzweig, einen Bypasszweig zur Umgehung des Kühlers oder auch einen Heizungswärmetauscher-Zweig. So kann beispielsweise über einen Kühlerzweig überschüssige Wärmemenge des Kühlmittels an die Umgebung abgegeben werden, oder über den Heizungswärmetauscher-Zweig einem Heizungswärmetauscher zur weiteren Nutzung zugeführt werden. Die Verteilung des Kühlmittelstroms auf die verschiedenen Teilzweige des Kühl- und Heizkreislaufes wird typischerweise über eine Mehrzahl von Ventilen gesteuert. Dazu sitzt beispielsweise ein Stell- oder Regelventil in der von einem Kühlerelement kommenden Zuleitung zur Wärmequelle und ein weiteres Stellventil in einer Bypassleitung zum Kühlerelement. So kann etwa die gewünschte Kühlmitteltemperatur eingangs der Wärmequelle durch Mischen eines gekühlten und eines ungekühlten Kühlmittelstroms eingestellt werden. Alternativ kann zu den beiden Stellventilen auch ein 3-Wege Mischventil genutzt werden.

Im Bereich der Kraftfahrzeugentwicklung wird derzeit intensiv an Konzepten für ein effizienteres Wärmemanagement im Fahrzeug gearbeitet. Hierbei geht es unter anderem auch um eine bedarfsgerechte Ansteuerung bzw. Regelung des Motorkühlsystems mit dem Ziel, den Kraftstoffverbrauch und die Emissionen des Verbrennungsmotors zu verringern, um Abgasgrenzwerte einhalten zu können bzw. den Komfort des Fahrzeuges zu erhöhen. Dabei dürfen kritische Grenzen der thermischen Bauteilbelastung nicht überschritten werden, andererseits müssen aber auch ausreichende Wärmemengen zu Heizzwecken bereitgestellt werden. Dies kann durch eine Optimierung des Kühlmittelvolumenstroms und die lastabhängige Regelung des Temperaturniveaus des Motors erreicht werden. Zur bedarfsgerechten Regelung, d.h. zur Erzielung einer optimierten Verteilung der Kühlmittelströme im Kühl- bzw. Heizkreislauf, werden daher im Rahmen eines sogenannten Thermomanagements für das Kraftfahrzeug seit einiger Zeit steuerbare Ventile vorgeschlagen, die die bisherigen Thermostatventile in Zukunft ersetzen sollen.

Aus der DE 35 16 502 A1 ist eine Temperatur-Regeleinrichtung für das Kühlmittel einer Brennkraftmaschine bekannt, die in der Vorlaufleitung bzw. der Bypassleitung eines Kühlkreislaufes ein Kühlmittelsteuerventil aufweist, welches in Abhängigkeit, beispielsweise der Kühlmitteltemperatur mittels eines Stellmotors betätigbar ist. Der Stellmotor besteht im wesentlichen aus einem elektrischen Stellantrieb, dessen abgangsseitiges Stellorgan getrieblich oder direkt angetrieben mit einem Ventilverschluss des Kühlmittelsteuerventils verbunden ist. Dem Ventil ist ein Steuerglied zugeordnet, dem einzelne, von Sensoren der Brennkraftmaschine erfasste Kennfeldgrößen, insbesondere die Kühlmitteltemperatur sowie die Außentemperatur, zugeführt werden können.

Aus der DE 100 53 850 A1 ist ein Ventil zur Steuerung der Volumenströme im Heiz- und Kühlsystem eines Kraftfahrzeuges bekannt, welches in einem Ausführungsbeispiel zwei, um eine exzentrisch zum Ventilgehäuse angeordnete Antriebswelle drehbare Ventilklappen aufweist. Die Ventilklappen des Ventils der DE 100 53 850 A1 sind auf einer gemeinsamen Welle drehbar gelagert und wirken mit zugeordneten Ventilsitzen der Ventilkammer des Ventils zusammen. Im Zusammenspiel mit den Ventilsitzen können die Ventilklappen die Ventilöffnungen öffnen bzw. schließen. Die Ventilklappen der DE 100 53 850 A1 bestehen jeweils aus einem Ventildichtkopf sowie einem Ventilgestänge. Ventildichtkopf und Ventilgestänge sind jeweils über ein Kugelgelenk miteinander verbunden.

Ausgehend vom zuvor zitierten Stand der Technik liegt der vorliegenden Erfindung die Aufgabe zu Grunde, ein Ventil zu schaffen, welches in einem Kühl- und/oder Heizkreislauf, insbesondere für ein Kraftfahrzeug, eine bedarfsgerechte Regelung und insbesondere eine optimierte Verteilung der Kühlmittelströme des Kühl- bzw. Heizkreislaufes ermöglicht.

### Vorteile der Erfindung

Das erfindungsgemäße Ventil mit den Merkmalen des unabhängigen Anspruchs 1 hat gegenüber den Ventilen des Standes der Technik den Vorteil, dass durch seine funktionale Einheit der Volumenstrom durch das Ventil bei Bedarf sowohl vollständig abgesperrt werden kann, als auch ein Volumenstrom, beispielsweise durch eine Bypassleitung zum Kühler, in definierter Weise angedrosselt werden kann. Ebenso ist es mit dem erfindungsgemäßen Ventil möglich, das Temperaturniveau des Kühlmittelvolumenstroms durch die zu kühlende Wärmequelle einzustellen. Bei der definierten Drosselung des einen ausgangsseitigen Volumenstroms ist der zweite ausgangsseitige Volumenstrom abgesperrt. Der Ablauf dieser Funktionsmöglichkeiten erfolgt nacheinander in einer definierten Reihenfolge, die in vorteilhafter Weise mit den Anforderungen eines Verbrennungsmotors während und nach seiner Aufwärmphase zusammenwirkt.

Eine elektrisch gesteuerte Hauptkühlmittelpumpe zur Steuerung der Kühlmittelvolumenströme in einem Kühl- und/oder Heizkreislauf ist dadurch nicht mehr unbedingt notwendig

In vorteilhafter Weise erlaubt das erfindungsgemäße Ventil insbesondere eine Vollabsperrung des Ventils, wodurch der gesamte Volumenstrom durch das Ventil erfindungsgemäß bei Bedarf vollständig abgesperrt wird. Auf diese Weise ist es beispielsweise auch möglich, einen Kühlmittelvolumenstrom durch den Verbrennungsmotor eines Kraftfahrzeuges vollständig abzusperren, um somit eine möglichst schnelle Aufheizung des Verbrennungsmotors während seiner Startphase zu gewährleisten.

Eine möglichst schnelle Aufheizung des Verbrennungsmotors eines Kraftfahrzeug führt zu einer schnellen Reduzierung der Schadstoffbestandteile im Abgassystem des Kraftfahrzeuges. Darüber hinaus ist es möglich, durch die schnelle Aufheizung des Motors frühzeitig einen günstigen Wirkungsgrad des Motors zu erreichen.

In vorteilhafter Weise werden diese Funktionsmöglichkeiten des erfindungsgemäßen Ventils dadurch erreicht, dass in der Ventilkammer, von der zumindest drei Strömungskanäle abzweigen, mindestens ein erster, um die Achse einer Antriebswelle aktiv drehbarer Ventilkörper angeordnet ist, der mit mindestens einem Ventilsitz der Ventilkammer zusammenwirkt, wobei mindestens ein weiterer, zweiter Ventilkörper über elastische Mittel mit dem mindestens einen ersten Ventilkörper derart wirkverbunden ist, dass eine Relativbewegung der Ventilkörper zueinander möglich ist.

Auf Grund der elastischen Mittel, die zwischen dem mindestens einen ersten Ventilkörper und dem mindestens einen zweiten Ventilkörper angeordnet sind, ist es in vorteilhafter Weise möglich, über lediglich eine Antriebswelle, je nach Betriebsbedingungen, entweder sämtliche in der Ventilkammer angeordnete Ventilkörper mit dieser einen Antriebswelle zu positionieren, oder aber eine Entkopplung der Bewegung der Ventilkörper voneinander vorzunehmen, so dass über die eine Antriebswelle lediglich eine Teilmenge der Ventilkörper weiter verfahren werden kann. Durch einen einseitigen Formschluss zwischen den Ventilgliedern, beispielsweise in der Art einer Anlageschulter an dem aktiv gestellten Ventilglied kann dieses das mindestens eine weitere, passive Ventilglied auch in der Entspannungsrichtung der elastischen Mittel mitführen.

Ein Kühl- und/oder Heizkreislauf mit einem solchen erfindungsgemäßen Ventil, das beispielsweise als Mischventil genutzt ist, kann durch eine exakte, bedarfsgerechte Einstellung der Kühlmittelvolumenströme durch eine entsprechende Positionierung der Ventilkörper in der Ventilkammer des Ventils zu einem reduzierten Kraftstoffverbrauch des Verbrennungsmotors sowie zu einem verringerten Schadstoffausstoß und einer verbesserten Lebensdauer des Verbrennungsmotors eines Kraftfahrzeuges beitragen. Insbesondere lässt sich durch ein gezieltes Thermomanagement des Kühl- und/oder Heizkreislaufes eines Kraftfahrzeugs auch der Wirkungsgrad seines Antriebsmotors verbessern.

Durch die in den abhängigen Ansprüche aufgeführten Maßnahmen sind vorteilhafte Weiterbildungen und Verbesserungen des in den unabhängigen Ansprüchen angegebenen Ventils bzw. des beanspruchten Kühl- und/oder Heizkreislaufs mit einem solchen Ventil möglich.

In vorteilhafter Weise lässt sich der mindestens eine erste Ventilkörper sowie der mindestens eine zweite Ventilkörper über elastische Mittel wirkverbinden, die zumindest ein Federelement aufweisen. Durch das Anbringen beispielsweise einer Dreh- oder Zugfeder zwischen dem mindestens einen ersten Ventilkörper und dem mindestens einen zweiten Ventilkörper ist es möglich, die relative Position der Ventilkörper zueinander durch Überwindung des von dem elastischen Mittel (Federelement) aufgebrachten Momentes in gewünschter Weise zu variieren.

In vorteilhafter Weise sind der mindestens eine erste und der mindestens eine zweite Ventilkörper dabei durch die Einwirkung der elastischen Mittel gegeneinander vorgespannt, so dass, ohne die Einwirkung eines zusätzlichen Momentes, die relative Position der Ventilkörper zueinander durch die Wirkung der elastischen Mittel definiert ist. Dabei kann die relative Position der mindestens zwei Ventilglieder durch eine einseitige Anschlagschulter, die am aktiven Ventilelement ausgebildet ist und dem Moment der elastischen Mittel entgegenwirkt, definiert sein. Auf diese Weise ist es möglich, durch die Antriebswelle des mindestens einen ersten Ventilkörpers auch den mindestens einen zweiten Ventilkörper in der Ventilkammer zu stellen. So lange keine zusätzlichen Momente auf den mindestens einen zweiten Ventilkörper einwirken, wird dieser auf Grund der Kopplung über die elastischen Mittel an den mindestens einen ersten Ventilkörper mitgeschleppt. Durch den einseitigen Formschluss zwischen den Ventilgliedern kann das aktive Ventilglied das mindestens zweite Ventilglied dann auch in der zweiten Verstellrichtung mitnehmen.

Insbesondere ist es möglich, die Ventilkörper der Ventilkammer des erfindungsgemäßen Ventils über eine Antriebswelle zu steuern bzw. zu regeln. In vorteilhafter Weise besitzen die Ventilkörper dazu eine gemeinsame Drehachse.
Die Drehachse der Antriebswelle des erfindungsgemäßen Ventils verläuft exzentrisch in der Ventilkammer, so dass das erfindungsgemäße Ventil ein Exzenterventil bildet. Auf Grund der kombinierten Dreh- und Hubbewegung der Ventilkörper, die sich durch die exzentrischen Anordnung der Drehachse bei einer Rotation der Antriebswelle der Ventilkörper ergibt, ist es insbesondere möglich, einen Ventilkörper in den Ventilsitz (Öffnung eines Strömungskanals) des Ventils derart hinein zu fahren, dass der Ventilkörper in der Öffnung abgestützt ist.

Wird die Antriebswelle im gleichen Drehsinn daraufhin weiter verdreht, so verbleibt der mindestens eine zweite (passive) Ventilkörper auf dem zugeordneten Ventilsitz, während der mindestens eine erste (aktive) Ventilkörper, entgegen der Rückstellkraft der elastischen Mittel, durch die Antriebswelle weiter verdreht werden kann. Auf diese Weise ist es möglich, durch Rotation der Antriebswelle in eine Richtung, erst einen ersten Auslasskanal und nachfolgend noch einen zusätzlichen, zweiten Kanal des erfindungsgemäßen Ventils, beispielsweise den Einlasskanal zu verschließen.

In einer vorteilhaften Weiterbildung des erfindungsgemäßen Ventils ist ein dritter Ventilkörper vorgesehen, der starr an den zweiten Ventilkörper gekoppelt ist.

In einer Ausführungsform des erfindungsgemäßen Ventils ist die Antriebswelle der Ventilkörper mit einem Aktuator wirkverbunden. Als Aktuator ist insbesondere ein solcher vorgesehen, der einen Motor, beispielsweise einen elektrischen Motor, aufweist. Zwischen dem Motor des Aktuators und der Antriebswelle kann in vorteilhafter Weise ein entsprechend geschaltetes Getriebe zur Übersetzung der Motordrehzahl vorgesehen sein. Durch eine sensorgesteuerte Funktion des Motors lässt sich die Antriebswelle des erfindungsgemäßen Ventils in definierter Weise verfahren und somit die Kühlmittelvolumenströme durch das erfindungsgemäße Ventil in definierter Weise sehr genau einstellen.

In vorteilhafter Weise lässt sich das erfindungsgemäße Ventil beispielsweise als 3-Wege-Mischventil in einem Kühl- und/oder Heizkreislauf für ein Kraftfahrzeug verwenden. Dabei kann das erfindungsgemäße Ventil beispielsweise als Bypassventil zur Umgehung eines Kühlerelementes eingesetzt werden. Auf Grund der Steuer- bzw. Regelbarkeit des erfindungsgemäßen Ventils ist es in vorteilhafter Weise möglich, die Kühlmittelvolumenströme durch die einzelnen Zweige des Kühl- und/oder Heizkreislaufs mengenmäßig einzustellen.

Mit dem erfindungsgemäßen Ventil ist es möglich, seine ausgangsseitigen Kühlmittelvolumenströme entsprechend eines vorgegebenen Mischverhältnisses zu mischen, wobei insbesondere ein Volumenstrom in definierter Weise angedrosselt werden kann oder bei Bedarf der gesamte Volumenstrom durch das Ventil vollständig abgesperrt werden kann. So kann beispielsweise durch den Einsatz des erfindungsgemäßen Ventils mit Vollabsperrung in einem Kühl- und/oder Heizkreislauf für ein Kraftfahrzeug, der Kühlmittelvolumenstrom durch den Motor, beispielsweise bei einem Kaltstart, abgesperrt werden. Dies führt in vorteilhafter Weise zu einer schnellen Aufheizung des Motors. Vorteilhaft ist hier insbesondere, dass diese Funktion mit einem einzigen Antrieb (Aktuator) realisiert werden kann. Das erfindungsgemäße Ventil ermöglicht somit die Vollabsperrung eines 3-Wege-Mischventils, insbesondere eines 3-Wege-Exzenterventils.

Weitere Vorteile des erfindungsgemäßen Ventils ergeben sich aus der nachfolgenden Beschreibung.

### Zeichnung

In der Zeichnung ist ein Ausführungsbeispiel des erfindungsgemäßen Ventils sowie ein erfindungsgemäßer Kühl- und/oder Heizkreislauf unter Verwendung eines solchen Ventils dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen
- Figur 1: ein Ausführungsbeispiel des erfindungsgemäßen Ventils in schematischer Darstellung in einer ersten Schaltstellung,
- Figur 2: das Ausführungsbeispiel des erfindungsgemäßen Ventils gemäß Figur 1 in einer zweiten Schaltstellung,
- Figur 3: das Ausführungsbeispiel des erfindungsgemäßen Ventils gemäß Figur 1 bzw. Figur 2 in einer dritten Schaltstellung,
- Figur 4: eine perspektivische Detailansicht Ansicht der Ventilkörper von der Unterseite her,
- Figur 5: ein Kühl- und/oder Heizsystem für ein Kraftfahrzeug unter Verwendung eines erfindungsgemäßen Ventils in vereinfachter, schematischer Darstellung.

### Beschreibung eines Ausführungsbeispiels

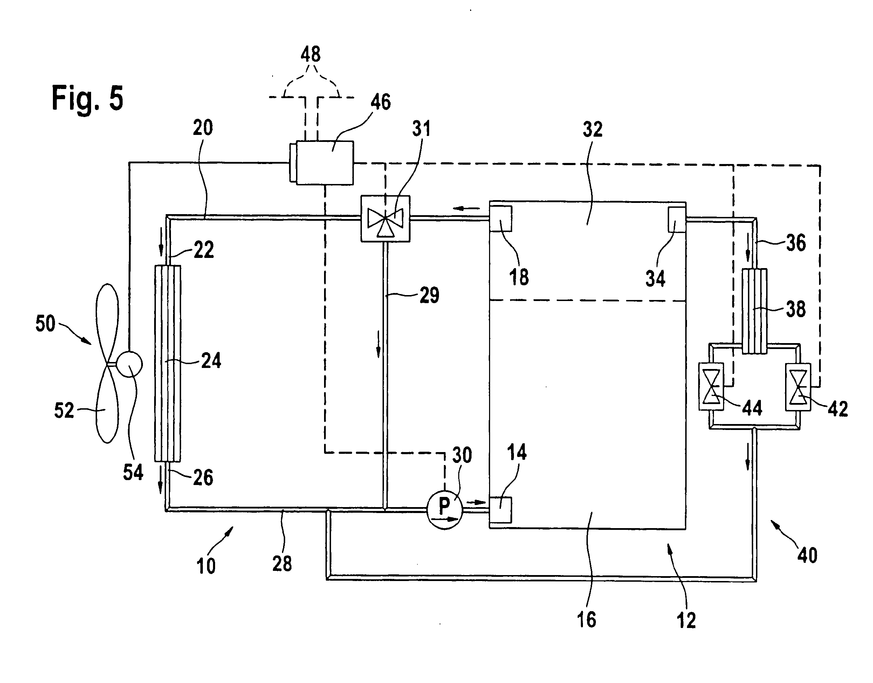

In Figur 5 ist in vereinfachter, schematischer Darstellung ein Kühl- und/oder Heizkreislauf 10 für ein Kraftfahrzeug dargestellt.

Ein zu kühlender Verbrennungsmotor 12 verfügt über einen ersten Kühlmitteleinlass 14 im Bereich seines Motorblocks 16, sowie über einen ersten Kühlmittelauslass 18, der über eine Rücklaufleitung 20 und einen Kühlereinlass 22 mit einem Kühlerelement 24 des Kühlkreislaufs 10 verbunden ist. Das Kühlerelement 24, im Folgenden auch kurz Kühler genannt, ist wiederum über einen Kühlerauslass 26 und eine Verbindungsleitung 28 mit dem Kühlmitteleinlass 14 des Verbrennungsmotors 12 verbunden.

Zur Umwälzung des Kühlmittels im Kühlkreislauf 10 des Verbrennungsmotors 12 befindet sich in der Verbindungsleitung 28 eine Kühlmittelpumpe 30, die im Ausführungsbeispiel der Figur 5 über ein Steuergerät 46 elektronisch geregelt ist. Mechanische Kühlmittelpumpen sind in anderen Ausführungsbeispielen des erfindungsgemäßen Kühl- und/oder Heizkreislaufs ebenso möglich.

Im Bereich seines Zylinderkopfes 32 weist der Verbrennungsmotor 12 einen zweiten Kühlmittelauslass 34 auf, der über eine Verbindungsleitung 36 mit einem Heizungswärmetauscher 38 eines Heizungsteilzweiges 40 des Kühl- und/oder Heizkreislaufs 10 verbunden ist. In diesem Heizungszweig 40 wird ein Teil des aus dem Motor 12 austretenden, erwärmten Kühlmittels genutzt, um über den Heizungswärmetauscher 38, die im heißen Kühlmittel gespeicherte Wärmeenergie zur Beheizung, beispielsweise eines in Figur 5 nicht weiter dargestellten Fahrzeuginnenraumes, zu nutzen. Die bedarfsgerechte Regelung der Heizfunktion ist in Figur 5 lediglich schematisch, durch gesteuerte Heizungsventile 42 bzw. 44 angedeutet.

Die Heizungsventile 42 bzw. 44 des Heizungsteilzweiges 40 werden im Ausführungsbeispiel des Kühl- und Heizungskreises 10 gemäß Figur 5 ebenso wie ein 3-Wege-Regelventil, welches als Bypassventil 31 des Motorkühlkreises genutzt wird, über ein Steuergerät 46 angesteuert und geregelt. Das Steuergerät 46, welches beispielsweise auch das Motorsteuergerät des Fahrzeugs sein kann, ist mit diversen Sensoren verbunden, die in Figur 5 der Übersicht halber nicht weiter dargestellt sind und lediglich durch elektrische Verbindungsleitungen 48 angedeutet sein sollen. Über diese Sensoren werden dem Steuergerät 46 aktuelle Parameter des Kühlkreislaufs bzw. des Motors zugeleitet, die dann mit einer im Steuergerät abgelegten Bedatung verglichen werden können, um daraus entsprechende Stellgrößen für die aktiven Komponenten des Kühl- und Heizkreislaufs 10 zu ermitteln.

Neben den Parametern des Kühlkreislaufs 10, wie beispielsweise der Kühlmitteltemperatur an diversen Stellen, wird auch die Motortemperatur und insbesondere die Motortemperatur an verschiedenen temperaturkritischen Stellen des Motors an das Steuergerät 46 übermittelt. Als weitere Eingangssignale für das Steuergerät 46 können darüber hinaus auch der Kraftstoffverbrauch, sowie die Schadstoffemission des Verbrennungsmotors über entsprechende Sensoren an das Steuergerät 46 übermittelt werden. Auch eine Übermittlung dieser Signale aus der Software zur Steuerung und Regelung des Verbrennungsmotors ist möglich.

Das Steuergerät 46 dient im Ausführungsbeispiel der Figur 5 ebenso der bedarfsgerechten Ansteuerung eines Kühlgebläses 50, welches zur Erhöhung der Kühlleistung dem Kühler 24 des Kühlkreislaufs zugeordnet ist. Das Kühlgebläse 50 besteht aus einem Lüfter 52 und einem, den Lüfter antreibenden Motor 54, der seine Ansteuerungsdaten und ggfls auch die Energieversorgung über entsprechende, elektrische Verbindungsleitungen vom Steuergerät 46 erhält. Darüber hinaus kann das Steuergerät 46 auch die Leistung der Kühlmittelpumpe 30, die im Ausführungsbeispiel der Figur 5 eine elektrisch angetriebene Kühlmittelpumpe ist, regeln.

Parallel zum Kühlerelement 24 befindet sich im Kühl- und Heizkreislauf 10 eine Bypassleitung 29, die die Rücklaufleitung 20 direkt mit der Verbindungsleitung 28 verbindet. Über die Bypassleitung 29 ist es möglich, das aus dem Kühlmittelauslass 18 austretende, durch den Motor erwärmte Kühlwasser unter Umgehung des Kühlerelementes 24 direkt wieder dem Motorblock 16 über den Kühlmitteleinlass 14 zuzuführen. Zur Steuer- und Regelung der relativen Volumenströme durch das Kühlerelement 24 einerseits, bzw. durch die Bypassleitung 29 andererseits, ist im dargestellten Ausführungsbeispiel eines Kühl- und Heizkreislaufs nach der Figur 5 ein 3-Wege-Regelventil 31 vorgesehen, welches ebenso vom Steuergerät 46 angesteuert bzw. geregelt wird.

Im Speziellen wird vom Steuergerät 46 jeweils eine Stellgröße für den Aktuator des Ventils 31 bzw. ebenso für die entsprechenden Aktuatoren der Heizungsventile 42 bzw. 44 des Heizungsteilzweiges 40 generiert, um die aktuelle Motor-Ist-Temperatur auf eine optimale Motor-Soll-Temperatur einzuregeln. Die Ansteuerung der Aktuatoren der im Kühl- und Heizkreislauf 10 vorgesehenen Ventile und insbesondere die Ansteuerung des Bypassventils 31 geschieht derart, dass der durch die Ventile geregelte Volumenstrom möglichst linear proportional zu der Stellgröße für den jeweiligen Aktuator des Ventils ist. Auf diese Weise lassen sich die Ventile in exakter Weise nach den Vorgaben des Steuergerätes stellen, so dass der Kühlmittelvolumenstrom sehr genau an die Vorgaben, beispielsweise eines in der Steuereinheit 46 abgelegten, zeitabhängigen Temperaturmodells für den Motor angepasst werden kann.

Zur Einstellung der optimalen Motortemperatur wird mit Hilfe der erfindungsgemäßen, steuerbaren Ventile der relative Kühlmittelvolumenstrom durch den Kühler 24 bzw. durch die Bypassleitung 29 geregelt. So kann beispielsweise in der Startphase des Motors 12, in noch zu beschreibender Weise, die Verbindungsleitung 20 zum Motorkühler 24 vollständig geschlossen werden und das 3-Wege-Ventil (Bypassventil) 31 in Richtung der Bypassleitung 29 gegebenenfalls vollständig oder aber auch nur geringfügig geöffnet, bzw. vollständig geschlossen werden. Auf diese Weise ist eine schnelle Erreichung der gewünschten Ziel temperatur des Motors 12 möglich, so dass die Betriebsbedingungen des geringeren Kraftstoffverbrauchs sowie der geringeren Schadstoffemission des Motors frühzeitig nach einem Kaltstart des Motors erreicht werden können.

Nach Erreichen der optimalen Motortemperatur kann die Kühlerzuleitung 20 durch das Bypassventil 31, d.h. durch den Bypassanschluss des 3-Weg-Ventils 31, geöffnet und die Bypassleitung 29 in entsprechendem Maße gedrosselt werden, um die überschüssige, durch den Motor 12 erzeugte Wärmeenergie über das Kühlerelement 24 sowie das Kühlgebläse 50 an die Umgebung abgeben zu können. So ist es mit dem erfindungsgemäßen Mischventil 31 in noch näher zu beschreibender Weise bei Bedarf möglich, die Volumenströme durch das Ventil gemäß einem definierten Mischverhältnis einzuregeln.

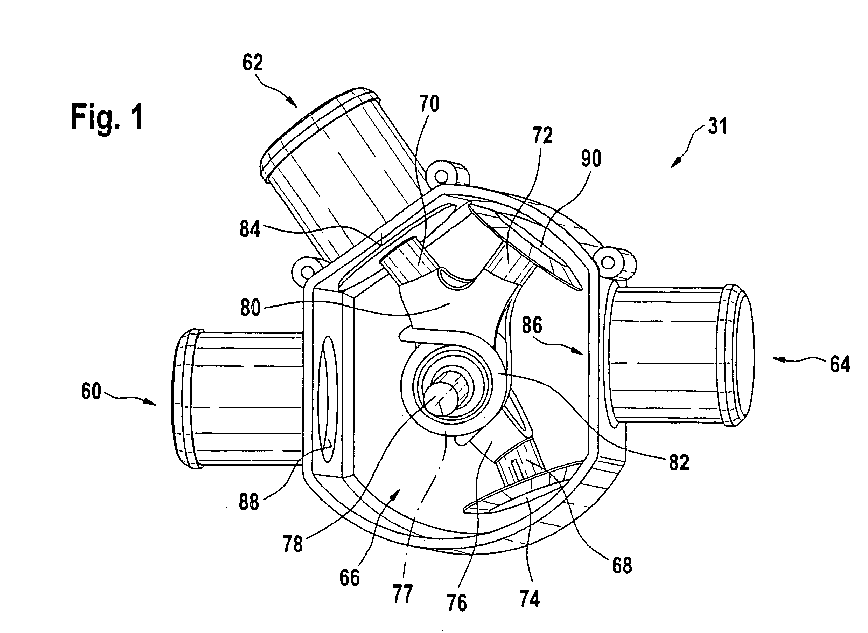

Figur 1 zeigt ein Ausführungsbeispiel des erfindungsgemäßen Ventils in einer perspektivischen Darstellung. Das Ausführungsbeispiel des Ventils 31 gemäß Figur 1 ist ein 3-Wege-Stellventil und daher als Bypassventil in einem Kühl- und/oder Heizkreislauf gemäß Figur 5 einsetzbar. Das erfindungsgemäße Ventil besitzt in diesem Ausführungsbeispiel einen Einlasskanal 60, einen ersten Auslasskanal 62 sowie einen zweiten Auslasskanal 64. Der erste Einlasskanal 60 kann dabei beispielsweise über entsprechende Verbindungsmittel mit dem Kühlmittelauslass 18 (siehe Figur 5) eines Verbrennungsmotors verbunden sein. Der erste Auslasskanal ist in entsprechender Weise dann mit der Bypassleitung 29 (siehe Figur 5) verbunden. Der zweite Auslasskanal 64 kann bei einer entsprechenden Anwendung des erfindungsgemäßen Ventils über Verbindungsmittel 20 mit einem Kühlerelement 24 verbunden sein. Die drei Strömungskanäle 60, 62 und 64 sind durch eine Ventilkammer 66 miteinander verbunden.

In der Ventilkammer 66 angeordnet sind im Ausführungsbeispiel gemäß Figur 1 drei Ventilkörper 68, 70 und 72. Der Ventilkörper 68, der in vorteilhafter Weise zweiteilig ausgebildet ist, besitzt einen Ventildichtkopf 74 sowie ein Ventilgestänge 76, die über ein Gelenk, vorzugsweise ein Kugelgelenk miteinander verbunden sind. Über eine Antriebswelle 78 wird der Ventilkörper 68 in seiner Position innerhalb der Ventilkammer 66 gesteuert.

Die beiden Ventilkörper 70 bzw. 72, die ebenfalls jeweils zweistückig ausgebildet sind, sind über eine gemeinsame Schulter 80 fest miteinander verbunden. Die Schulter 80 umgreift die Antriebswelle 78 des Ventilkörpers 68, ist jedoch mit dieser nicht fest verbunden. Zwischen dem Ventilgestänge 76 des ersten Ventilkörpers 68 und der gemeinsamen Schulter 80 der Ventilkörper 70 und 72 ist ein elastisches Federelement 82 angeordnet, welches im vorgespannten Zustand zu der in Figur 1 dargestellten relativen Anordnung der Ventilkörper 68, 70 und 72 zueinander führt.

Wird der erste Ventilkörper 68 über die Antriebswelle 78 im Ventilgehäuse gestellt, so werden die Ventilkörper 70 und 72 über das Federelement 82 so lange mitgeführt, wie kein rücktreibendes Element auf die lediglich elastisch an die Antriebswelle 78 angekoppelten Ventilkörper 70 bzw. 72 einwirkt. Die relative Beweglichkeit der Ventilkörper 70 bzw. 72 zum aktiven Ventilkörper 68 ist in der einen Richtung (im dargestellten Ausführungsbeispiel: Rotation der Drehachse im Uhrzeigersinn) durch das sich in diesem Fall anspannende elastische Federelement 82 bestimmt. In der anderen Drehrichtung kommt eine Anschlagschulter 92, die am Ventilkörper 68 ausgebildet ist, zur Anlage an einen, die relative Beweglichkeit der Ventilkörper zueinander begrenzendes Stoppelement 94, welches an der gemeinsamen Schulter 80 der Ventilkörper 70 bzw. 72 ausgebildet ist.

Die Antriebswelle 78 rotiert die Ventilkörper 68, 70, 72 um eine Drehachse 77, welche exzentrisch in der Ventilkammer 66 des erfindungsgemäßen Ventils verläuft. Die Exzentrizität ergibt sich aus der Anordnung der Drehachse 77 zu dem mindestens einen Ventilsitz 88, wobei die Achse 77 eine imaginäre, durch das Zentrum der vom Ventissitz 88 gebildeten Querschnittsfläche verlaufende Orthogonallinie zu diesem Ventilsitz nicht schneidet. Die exzentrische Anordnung der Drehachse 77 der Ventilkörper führt zu einer kombinierten Dreh- und Hubbewegung bei Rotation der Antriebswelle 78.

Die in Figur 1 dargestellte Stellung der Ventilkörper des erfindungsgemäßen Ventils entspricht - bei oben beschriebener Verschaltung des Ventils in den Kühl- bzw. Heizkreislauf nach Figur 5 - der Situation, in der beispielsweise die Bypassleitung 29 gemäß Figur 5 beispielsweise geschlossen sein kann und der gesamte Kühlmittelvolumenstrom aus dem Kühlmittelauslass 18 des Verbrennungsmotors 16 über das Ventil 31 dem Kühlerelement 24 zugeführt werden kann. Der Einlasskanal 60 des erfindungsgemäßen Ventils ist dabei über die Ventilkammer 66 mit dem zweiten Auslasskanal 64 verbunden. Der Ventilkörper 70 ist in den Ventilsitz 84 der Ventilkammer gefahren und verschließt somit den Auslasskanal 62.

Wird die Antriebswelle 78 gemäß Figur 1 im Uhrzeigersinn gedreht, so wird der Ventilkörper 68 in entsprechender Richtung verfahren. Durch die elastischen Mittel 82, die die Ventilkörper 70 und 72 formschlüssig an den Ventilkörper 68 koppeln, werden auch diese Ventilkörper im Uhrzeigersinn verfahren. Dabei wird der erste Auslasskanal 62 teilweise freigegeben und der zweite Auslasskanal 64 entsprechend dem Drehwinkel der Antriebswelle 78 durch den Ventilkörper 72 teilweise verschlossen. Auf diese Weise ist es möglich, mit dem erfindungsgemäßen Ventil den über den Einlasskanal 60 in die Ventilkammer 66 einströmenden Kühlmittelvolumenstrom auf die beiden Auslasskanäle 62 bzw. 64 aufzuteilen. Je nach Drehwinkel der Antriebswelle 78 können die Auslasskanäle 62 bzw. 64 mehr oder weniger geschlossen bzw. geöffnet werden.

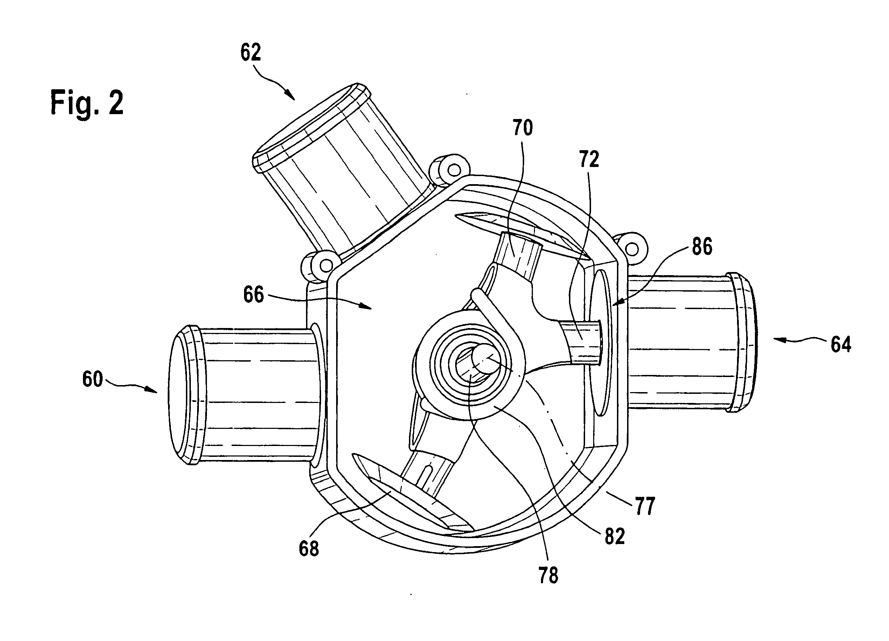

Figur 2 zeigt eine Stellung des erfindungsgemäßen Ventils, bei der der Auslasskanal 62 vollständig geöffnet, der Auslasskanal 64 jedoch vollständig geschlossen ist. In diesem Fall würden der aus dem Verbrennungsmotor 16 austretende Kühlmittelvolumenstrom gemäß Figur 5 unter Umgehung des Kühlerelementes 24 vollständig durch die Bypassleitung 29 geleitet und sofort über den Kühlmitteleinlass 14 dem Verbrennungsmotor wieder zur Verfügung gestellt werden.

Wird die Antriebswelle 78 ausgehend von ihrer Stellung in Figur 2 weiter im Uhrzeigersinn verfahren, so wird der Ventilkörper 68, der direkt mit der Antriebswelle 78 verbunden ist, in entsprechender Weise im Uhrzeigersinn verdreht. Durch die kombinierte Dreh- und Hubbewegung auf Grund der Exzentrizität der Antriebswelle 78 ist der Ventilkörper 72 in den Ventilsitz 86 eingestellt. Der Dichtteller 90 des Ventilkörpers 72 stützt sich dabei am Ventilsitz 86 ab, so dass aufgrund der exzentrischen Rotation der Ventilkörper ein Gegenmoment erzeugt wird, welches über den Ventilkörper 72 auf die gemeinsame Schulter 80 der Ventilkörper 72 und 70 wirkt. Dieses Gegenmoment oder rückhaltende Moment, welches auf den Ventilkörper 72 einwirkt, führt dazu, dass bei Drehung der Antriebswelle 78 im Uhrzeigersinn aus der Stellung gemäß Figur 2 heraus, das elastische Federelement 82 zwischen dem angetriebenen Ventilkörper 68 und der gemeinsamen Schulter 80 der passiven Ventilkörper 70 bzw. 72 gespannt wird. Der Aktuator der Antriebswelle 78 arbeitet dabei gegen die Spannkraft des Federelementes 82, da der Ventilkörper 72 in der Ventilöffnung 86 verbleibt.

Durch Rotation der Antriebswelle 78 ausgehend von der Stellung der Ventilkörper in Figur 2 kann somit nun lediglich der Ventilkörper 68 gesteuert werden. Entsprechend dem vom Aktuator vorgegebenen Drehwinkel wird der Ventilkörper 68 bei Rotation im Uhrzeigersinn den Einlasskanal 60 des erfindungsgemäßen Ventils teilweise bzw. vollständig verschließen. Bei dieser Stellung verbleiben die Ventilkörper 72 bzw. 70 auf Grund des gegenwirkenden Momentes auf den Ventilkörper 72 in ihrer, in Figur 2 dargestellten Position.

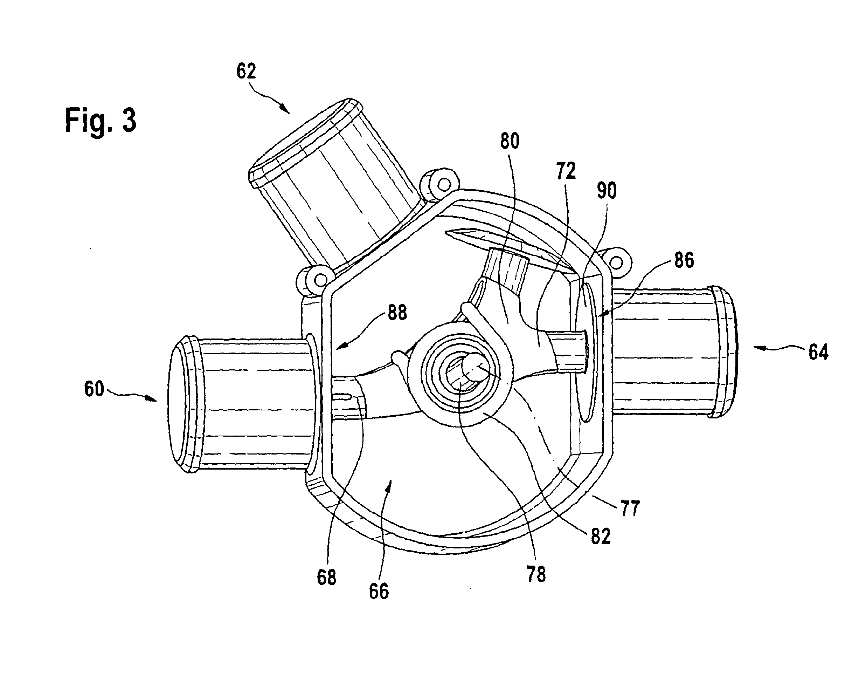

Figur 3 zeigt eine Stellung des erfindungsgemäßen Ventils, bei dem der Ventilkörper 68 durch weitere Rotation der Antriebswelle 78 im Uhrzeigersinn ausgehend von Figur 2 vollständig in den Ventilsitz 88 des Einlasskanals 60 eingefahren ist. In dieser Ventilstellung ist sowohl der Einlasskanal 60, als auch der zweite Auslasskanal 64 vollständig geschlossen, so dass es zu keinerlei Kühlmittelvolumenstrom durch das erfindungsgemäße Ventil kommen kann.

Für den Kühl- und/oder Heizkreislauf gemäß Figur 5 bedeutet dies, dass es keinerlei Kühlmittelzirkulation durch den Verbrennungsmotor 16 gibt, lediglich das in den Kühlmittelleitungen innerhalb des Motors befindliche Kühlmittel kann eine gewisse Wärmemenge von dem sich aufheizenden Verbrennungsmotor aufnehmen.

Durch die zuvor beschriebene Vollabsperrung des erfindungsgemäßen Ventils ist somit eine sehr schnelle Aufheizung des Verbrennungsmotors auf eine gewünschte Zieltemperatur möglich.

Durch eine entsprechende Rotation der Antriebswelle 78 ausgehend von Figur 3 entgegen dem Uhrzeigersinn können die zuvor beschriebenen Stellungen des erfindungsgemäßen Ventils in umgekehrter Reihenfolge wiederum durchlaufen werden. Die Drehung der Antriebswelle 78 entgegen dem Uhrzeigersinn kann durch einen entsprechend ausgebildeten reversiblen Antrieb oder gegebenenfalls auch über einen elastischen Rückstellmechanismus ausgebildet sein. In letzterem Fall ließe sich in vorteilhafter Weise ein Aktuator zur Stellung des erfindungsgemäßen Ventils nutzen, der lediglich in einer Richtung (im dargestellten Ausführungsbeispiel in Richtung des Uhrzeigers) ein aktives Moment auf die Antriebswelle 78 einbringen muss. In der umgekehrten Richtung könnte beispielsweise eine Rückstellfeder dafür sorgen, dass die Ausgangsposition von den Ventilkörpern wieder eingenommen werden kann.

Beim Betrieb der Antriebswelle 78 entgegen dem Uhrzeigersinn, ausgehend von der Ventilstellung in Figur 3, verharren die Ventilkörper 72 bzw. 70 in ihrer in Figur 3 bzw. 2 dargestellten Position. Erst wenn das elastische Federelement 82 zwischen dem aktiven Ventilkörper 68 und der gemeinsamen Schulter 80 der beiden passiven Ventilkörper 70 bzw. 72 wieder vollkommen entspannt ist, was in etwa der in Figur 2 dargestellten Position der Ventilkörper entspricht, werden - aufgrund der Anschlagschulter 92 am aktiven Ventilkörper 68 - bei weiterer Drehung der Antriebswelle 78 entgegen dem Uhrzeigersinn sowohl der aktive Ventilkörper 68, als auch die passiven Ventilkörper 70 bzw. 72 in Richtung entgegen dem Uhrzeigersinn zurückgestellt.

Zur Unterstützung dieser Rückstellbewegung der passiven Ventilkörper 70 bzw. 72 besitzt das Ventilgestänge 76 des aktiven Ventilkörpers 68 eine Anlageschulter 92, die in einen als Stoppelement dienenden Vorsprung 94 der gemeinsamen Schulter 80 der passiven Ventilglieder 70 bzw. 72 eingreift und dazu führt, dass im dargestellten Ausführungsbeispiel bei Drehung des aktiven Ventilgliedes 68 in Richtung entgegen dem Uhrzeigersinn auch die passiven Ventilkörper 70 bzw. 72 in entsprechender Weise mitgeführt werden und beispielsweise wieder in die in Figur 1 dargestellte Ausgangsposition anlangen können.

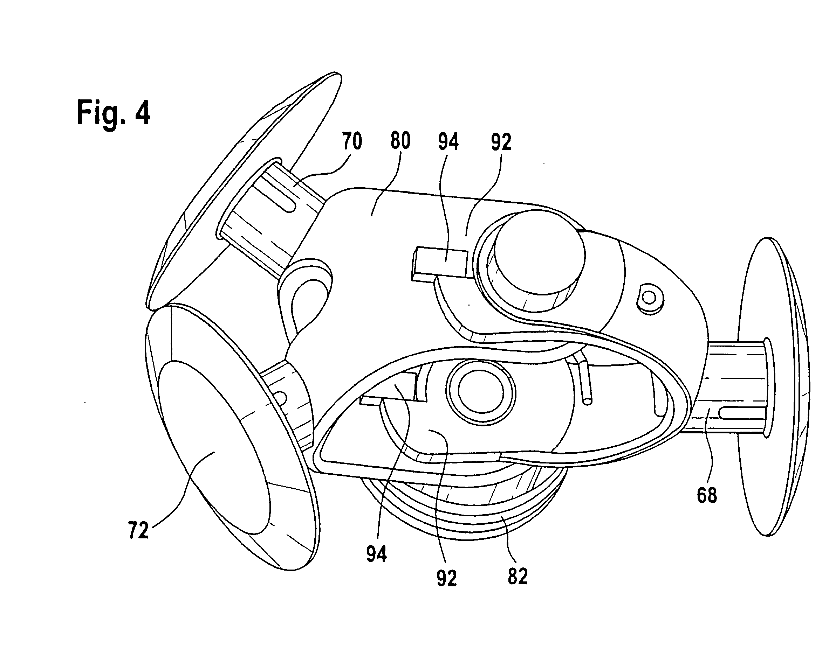

Figur 4 zeigt in einer perspektivischen Ansicht die Unterseite der Ventilkörper 68 und 70 bzw. 72, in einer Stellung, die in etwa der Position der Ventilglieder in Figur 2 entspricht. An der gemeinsamen Schulter 80 der beiden Ventilkörper 70 und 72 sind im Ausführungsbeispiel zwei Stoppelemente 94 angeordnet. Durch das elastische Federelement 82 werden dieses Stoppelemente 94 gegen eine Anlageschulter 92, die auf dem Ventilgestänge des aktiven Ventilkörpers 68 ausgebildet ist, gedrückt. Wird nun der aktive Ventilkörper 68 des Ausführungsbeispiels entgegen dem Uhrzeigersinn rückgestellt, (dies entspricht in Figur 4 einer Rotation im Uhrzeigersinn,) so drückt die Anlageschulter 92 gegen die Stoppelemente 94, so dass auf die Stoppelemente und die damit verbundene Schulter 80 ein Moment ausgeübt wird, welches zu einer entsprechenden Verstellung auch den Ventilkörper 70 bzw. 72 führt. Die Rotation des aktiven Ventilelementes 68 entgegen dem Uhrzeigersinn stellt somit auch die über die gemeinsame Schulter 80 verbundenen Ventilkörper 70 und 72 zurück.

Mit dem erfindungsgemäßen Ventil ist es möglich, den Volumenstrom durch das Ventil durch Verschluss des Einlasskanals bzw. durch Verschluss des Einlass- sowie eines Auslasskanals auf Null einzustellen. Damit ist das beschriebene, erfindungsgemäße Ventil in besonderer Weise geeignet, in einem Thermomanagementsystem für ein Kraftfahrzeug eingesetzt zu werden. Mit Hilfe des erfindungsgemäßen Ventils lassen sich die Kühlmittelströme in einem Kühl- und/oder Heizkreislauf eines Kraftfahrzeuges in definierter Weise steuern und somit die Kühl- bzw. Heizleistung des Kreislaufs optimieren.

Das erfindungsgemäße Ventil ist nicht auf die in den Zeichnungen und der Beschreibung dargestellte Ausführungsform beschränkt.
Insbesondere ist das erfindungsgemäße Ventil nicht beschränkt auf die Verwendung eines Federelementes als elastische Wirkverbindung zwischen den Ventilkörpern. Weitere, dem Fachmann bekannte Mittel, die eine erfindungsgemäße Wirkverbindung ermöglichen, sind selbstverständlich ebenso möglich.

Das erfindungsgemäße Ventil ist nicht beschränkt auf die Nutzung eines Einlasskanals und zweier Auslasskanäle. Eine Umkehrung der Strömungsrichtung ist ebenfalls möglich.

Das erfindungsgemäße Ventil ist nicht beschränkt auf ein 3-Wege-Ventil. Die zu Grunde liegende, erfinderische Idee lässt sich in analoger Weise auch für Ventile mit zusätzlichen Ein- oder Auslasskanälen realisieren.

Das erfindungsgemäße Ventil ist nicht beschränkt auf die Verwendung in einem Kühlund/oder Heizkreislauf für ein Kraftfahrzeug.

## Patentansprüche

1. Ventil zur Steuerung von Volumenströmen, insbesondere zur Steuerung von Volumenströmen eines Kühl- und/oder Heizsystems (10) für ein Kraftfahrzeug, mit einer Ventilkammer (66), von der zumindest drei Strömungskanäle (60,62,64) abzweigen, sowie mit mindestens einem ersten, um eine exzentrisch zur Ventilkammer (66) verlaufende Achse (77) einer Antriebswelle (78) drehbaren Ventilkörper (68), der mit mindestens einem Ventilsitz (88) der Ventilkammer (66) zusammenwirkt, **dadurch gekennzeichnet, dass** mindestens ein weiterer, zweiter Ventilkörper (72) vorgesehen ist, der über elastische Mittel (82) mit dem mindestens einen ersten Ventilkörper (68) derart wirkverbunden ist, dass eine Relativbewegung der Ventilkörper (68,70) zueinander möglich ist.

2. Ventil nach Anspruch 1, **dadurch gekennzeichnet, dass** der mindestens eine erste (68) und der mindestens eine zweite (72) Ventilkörper durch die Einwirkung der elastischen Mittel (82) gegeneinander vorgespannt sind.

3. Ventil nach Anspruch 1 oder 2, **dadurch gekennzeichnet, dass** der mindestens eine erste Ventilkörper (68) gegen die elastischen Mittel (82) stellbar ist, wenn der mindestens eine zweiteVentilkörper (72) ein rückhaltendes Moment erfährt.

4. Ventil nach Anspruch 3, **dadurch gekennzeichnet, dass** das rückhaltende Moment durch einen Formschluss realisiert ist.

5. Ventil nach Anspruch 3, **dadurch gekennzeichnet, dass** das rückhaltende Moment durch die exzentische Rotation mindestens eines Ventilgliedes realisiert ist.

6. Ventil nach einem der vorhergehenden Ansprüche 1 bis 5, **dadurch gekennzeichnet, dass** die elastischen Mittel (82) mindestens ein Federelement (82) aufweisen.

7. Ventil nach einem der vorhergehenden Ansprüche 1 bis 6, **dadurch gekennzeichnet, dass** ein dritter Ventilkörper (70) vorgesehen ist, der starr an den zweiten Ventilkörper (72) gekoppelt ist.

8. Ventil nach einem der vorhergehenden Ansprüche, **dadurch gekennzeichnet, dass** die Ventilkörper (68,70,72) eine gemeinsame Drehachse (77) aufweisen.

9. Ventil nach Anspruch 1, **dadurch gekennzeichnet, dass** die Antriebswelle (78) mit einem Aktuator wirkverbunden ist.

10. Ventil nach Anspruch 9, **dadurch gekennzeichnet, dass** der Aktuator einen Motor, insbesondere einen elektrischen Motor, aufweist.

11. Ventil nach Anspruch 10, **dadurch gekennzeichnet, dass** der Aktuator ein Getriebe aufweist, welches zwischen dem Motor und der Antriebswelle (78) geschaltet ist,

12. Kühl- und/oder Heizkreislauf (10), insbesondere für ein Kraftfahrzeug, mit zumindest einer Wärmequelle (12,16,32), insbesondere einem Verbrennungsmotor (12), mindestens einem Kühlerelement (24) und mit zumindest einem Exzenterventil (31), die über Verbindungsmittel (20,10,29,14,18) derart miteinander verbunden sind, dass ein in den Verbindungsmitteln befindliches Kühlmittel sowohl die Wärmequelle (16.32), als auch das Kühlerelement (24) durchfließen kann, **dadurch gekennzeichnet, dass** das Exzenterventil (31) mindestens einen ersten, um die Achse (77) einer Antriebswelle (78) drehbaren Ventilkörper (68), sowie mindestens einen weiteren, zweiten Ventilkörper (72) aufweist, die über elastische Mittel (82) miteinander wirkverbunden sind.

13. Kühl- und/oder Heizkreislauf nach Anspruch 12, **dadurch gekennzeichnet, dass** das Ventil (31) ein 3-Wege-Mischventil ist.

14. Kühl- und/oder Heizkreislauf nach Anspruch 12 oder 13, **dadurch gekennzeichnet, dass** das Ventil (31) mit einer Bypassleitung (29) zur Umgehung des mindestens einen Kühlerelementes (24) verbindbar ist.

## Claims

1. Valve for controlling volumetric flow rates, in particular for controlling volumetric flow rates of a cooling and/or heating system (10) for a motor vehicle, with a valve chamber (66) from which at least three flow passages (60, 62, 64) branch off, and with at least one first valve body (68) which can rotate about an axis (77), which runs eccentrically with respect to the valve chamber (66), of a drive shaft (78) and interacts with at least one valve seat (88) of the valve chamber (66), **characterized in that** at least one further, second valve body (72) is provided which is operatively connected to the at least one first valve body (68) via elastic means (82) in such a manner that a movement of the valve bodies (68, 70) relative to each other is possible.

2. Valve according to Claim 1, **characterized in that** the at least one first valve body (68) and the at least one second valve body (72) are prestressed towards one another by the action of the elastic means (82).

3. Valve according to Claim 1 or 2, **characterized in that** the at least one first valve body (68) is adjustable with respect to the elastic means (82) if the at least one second valve body (72) experiences a retaining moment.

4. Valve according to Claim 3, **characterized in that** the retaining moment is realized by a positive connection.

5. Valve according to Claim 3, **characterized in that** the retaining moment is realized by the eccentric rotation of at least one valve element.

6. Valve according to one of the preceding Claims 1 to 5, **characterized in that** the elastic means (82) have at least one spring element (82).

7. Valve according to one of the preceding Claims 1 to 6, **characterized in that** a third valve body (70) is provided which is coupled rigidly to the second valve body (72).

8. Valve according to one of the preceding claims, **characterized in that** the valve bodies (68, 70, 72) have a common axis of rotation (77).

9. Valve according to Claim 1, **characterized in that** the drive shaft (78) is operatively connected to an actuator.

10. Valve according to Claim 9, **characterized in that** the actuator has a motor, in particular an electric motor.

11. Valve according to Claim 10, **characterized in that** the actuator has a gear which is connected between the motor and the drive shaft (78).

12. Cooling and/or heating circuit (10), in particular for a motor vehicle, with at least one heat source (12, 16, 32), in particular an internal combustion engine (12), at least one radiator element (24) and with at least one eccentric valve (31), which are connected to one another via connecting means (20, 10, 29, 14, 18) in such a manner that a coolant situated in the connecting means can flow through both the heat source (16, 32) and the radiator element (24), **characterized in that** the eccentric valve (31) has at least one first valve body (68) which can rotate about the axis (77) of a drive shaft (78) and at least one further, second valve body (72), which are operatively connected to each other via elastic means (82).

13. Cooling and/or heating circuit according to Claim 12, **characterized in that** the valve (31) is a 3-way mixing valve.

14. Cooling and/or heating circuit according to Claim 12 or 13, **characterized in that** the valve (31) can be connected to a bypass line (29) for bypassing the at least one radiator element (24).

## Revendications

1. Soupape pour commander des débits volumétriques, en particulier pour commander des débits volumétriques d'un système de refroidissement et/ou de chauffage (10) pour un véhicule automobile, comprenant une chambre de soupape (66) de laquelle partent au moins trois canaux d'écoulement (60, 62, 64), ainsi qu'au moins un premier corps de soupape (68) qui tourne autour d'un axe (77) d'un arbre d'entraînement (78) excentré par rapport à la chambre de soupape (66) et qui coopère avec au moins un siège de soupape (88) de la chambre de soupape (66),
**caractérisée en ce qu'**
on prévoit au moins un deuxième corps de soupape (72) relié de manière active au premier corps de soupape (68) par des moyens élastiques (82) pour permettre un mouvement relatif des corps de soupape (68, 70) l'un par rapport à l'autre.

2. Soupape selon la revendication 1,
**caractérisée en ce qu'**
un premier (68) et un deuxième (72) corps de soupape sont précontraints par l'effet des moyens élastiques (82).

3. Soupape selon la revendication 1 ou 2,
**caractérisée en ce qu'**
un premier corps de soupape (68) peut être déplacé à l'encontre des moyens élastiques (82) lorsque un deuxième corps de soupape (72) subit un couple de retenue.

4. Soupape selon la revendication 3,
**caractérisée en ce que**
le couple de retenue est réalisé par liaison par la forme.

5. Soupape selon la revendication 3,
**caractérisée en ce que**
le couple de retenue est réalisé par la rotation excentrée un organe de soupape.

6. Soupape selon l'une des revendications 1 à 5,
**caractérisée en ce que**
les moyens élastiques (82) présentent un élément de ressort (82).

7. Soupape selon l'une des revendications 1 à 6,
**caractérisée par**
un troisième corps de soupape (70) couplé de façon rigide au deuxième corps de soupape (72).

8. Soupape selon l'une des revendications précédentes,
**caractérisée en ce que**
les corps de soupape (68, 70, 72) présentent un axe de rotation commun (77).

9. Soupape selon la revendication 1,
**caractérisée en ce que**
l'arbre d'entraînement (78) est relié de manière active à un actionneur.

10. Soupape selon la revendication 9,
**caractérisée en ce que**
l'actionneur présente un moteur, en particulier un moteur électrique.

11. Soupape selon la revendication 10,
**caractérisée en ce que**
l'actionneur présente un engrenage monté entre le moteur et l'arbre d'entraînement (78).

12. Circuit de refroidissement et/ou de chauffage (10), en particulier pour un véhicule automobile, comprenant au moins une source de chaleur (12, 16, 32), en particulier un moteur à combustion (12), au moins un élément refroidisseur (24) et au moins une soupape à excentrique (31) reliés l'un à l'autre par des moyens de liaison (20, 10, 29, 14, 18) pour permettre à un fluide de refroidissement circulant dans les moyens de liaison de traverser aussi bien la source de chaleur (16, 32) que l'élément refroidisseur (24),
**caractérisé en ce que**
la soupape à excentrique (31) présente au moins un premier corps de soupape (68) qui tourne autour de l'axe (77) d'un arbre d'entraînement (78), ainsi qu'au moins un deuxième corps de soupape (72) reliés l'un à l'autre de manière active par des moyens élastiques (82).

13. Circuit de refroidissement et/ou de chauffage selon la revendication 12,
**caractérisé en ce que**
la soupape (31) est une soupape mélangeuse à 3 voies.

14. Circuit de refroidissement et/ou de chauffage selon la revendication 12 ou 13,
**caractérisé en ce que**
la soupape (31) peut être reliée à une conduite de dérivation (29) pour contourner un élément refroidisseur (24).
